# FASCICULE DE BREVET EUROPEEN

(11) **EP 2 276 975 B1**
(45) Date de publication et mention de la délivrance du brevet: **30.05.2018**
(21) Numéro de dépôt: 09728797.3
(22) Date de dépôt: 25.02.2009
(51) Int. Cl.: F23C 5/02, F23M 5/02, C03B 5/235, F23D 14/00, F23D 17/00

(54) **OUTIL DE COMBUSTION COMPORTANT UN BLOC OUVREAU ET UN INJECTEUR, SON ASSEMBLAGE ET FOUR EQUIPE DUDIT OUTIL**
VERBRENNUNGSEINHEIT MIT EINEM BRENNERBLOCK SOWIE INJEKTOR, STRUKTUR UND OFEN MIT BESAGTER VERBRENNUNGSEINHEIT
COMBUSTION TOOL COMPRISING QUARL BLOCK AND INJECTOR, THE STRUCTURE AND FURNACE OF WHICH ARE EQUIPPED WITH SAID TOOL

(30) Priorité: 03.04.2008 FR 0852238
(43) Date de publication de la demande: 26.01.2011
(73) Titulaire: L'Air Liquide Société Anonyme pour l'Etude et l'Exploitation des Procédés Georges Claude, 75007 Paris (FR)
(72) Inventeur: BELASSE, Brenice, F-28130 Maintenon (FR); KALCEVIC, Robert, F-78000 Versailles (FR); PERIASAMY, Chendhil, 19701 Bear Delaware (US); PRABHAKAR, Rajeev S., Wilmington Delaware 19803 (US)
(74) Mandataire: De Vleeschauwer, Natalie Y.L.D.
(86) Numéro de dépôt international: PCT/FR2009/050298
(87) Numéro de publication internationale: WO 2009/122049

(56) Documents cités:
- WO-A-99/39833
- FR-A- 2 475 692
- FR-A- 2 735 122
- US-A- 1 953 590
- US-A- 4 125 359

## Description

La présente invention concerne un outil de combustion, tel qu'un brûleur comportant un bloc ouvreau et au moins un injecteur ainsi que l'assemblage d'un tel outil de combustion apte à être utilisé dans un four contenant une atmosphère riche en volatiles et/ou matières en suspension.

Dans le présent contexte, on désigne par « outil de combustion » un outil pour véhiculer du combustible et/ou du comburant depuis l'extérieur vers l'intérieur de la chambre de combustion par le biais d'un corps qui se compose de conduits ou de pièces généralement métalliques. A l'extrémité de ce corps est disposé un ou plusieurs injecteur(s) dont le rôle est d'une part, de faire la jonction avec le bloc ouvreau et d'autre part, de transmettre au(x) jet(s) de combustible et/ou de comburant les caractéristiques aérodynamiques nécessaires pour l'obtention d'une flamme aux spécificités souhaitées.

On désigne par « brûleur » un « outil de combustion » utilisé pour véhiculer et réunir du combustible et du comburant.

Les injecteurs sont généralement également réalisés en matières métalliques, d'une part du fait des contraintes en termes de précisions et de raccordement au corps métallique, et d'autre part en termes de coût du fait du caractère onéreux des pièces céramiques réfractaires.

Le terme « réfractaire » pour des matériaux non métalliques caractérise des matériaux non-métalliques pouvant être utilisés à des températures supérieures ou du moins égales à 1500 °C.

Le bloc ouvreau est généralement réalisé en matériau(x) réfractaire(s) non métallique(s). Sa fonction est de protéger les pièces métalliques de l'outil de combustion ou du brûleur du rayonnement provenant de la chambre de combustion et aussi de faire la jonction entre l'outil ou le brûleur et la paroi de l'enceinte dans laquelle se développe la flamme, cette enceinte étant appelée ci-après « chambre de combustion ».

Un tel brûleur et son utilisation dans un canal pour le conditionnement du verre sont notamment connus de WO 99/39833.

L'utilisation d'un ou plusieurs injecteur(s) dans des procédés de chauffage engendre fréquemment des contraintes de maintenance ou de remplacement desdits injecteurs.

En effet, quand l'outil ou le brûleur est utilisé :
- la température de la sortie du bloc ouvreau est généralement très proche de celle à l'intérieur de la chambre de combustion,
- la température du ou des injecteurs est généralement inférieure à celle du bloc ouvreau et a fortiori aussi inférieure à la température maximale d'utilisation du matériau qui compose le ou les injecteur(s). Cette température plus basse que celle du bloc ouvreau provient de la circulation des fluides, gaz ou liquides, dans le ou les injecteurs.

La circulation des fluides dans l'injecteur permet donc de refroidir ledit injecteur pour maintenir sa température en dessous d'un seuil limite imposé par les caractéristiques du matériau qui le compose. Un refroidissement insuffisant a pour conséquence une dégradation/détérioration plus ou moins rapide du matériau et donc de l'injection, pour exemples une oxydation ou une fusion du matériau. Un refroidissement insuffisant de l'injecteur peut avoir pour effet aussi une formation de suie engendrant un dépôt de carbone sur l'injecteur, obstruant la zone de sortie du fluide, notamment s'il s'agit d'un combustible, du fait de l'initiation de la réaction de combustion ou d'une décomposition dans la dite zone de sortie. Le refroidissement de l'injecteur par la circulation du ou des fluides injectés protège ainsi l'injecteur.

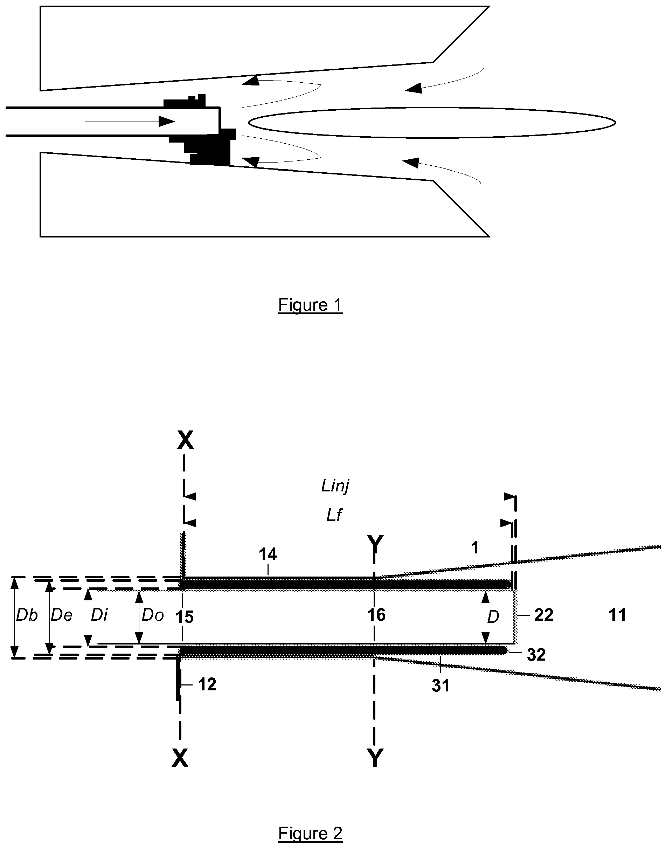

Toutefois, le refroidissement de l'injecteur peut engendrer également des problèmes, comme pour exemple notamment l'apparition d'un dépôt de matière sur le nez de l'injecteur. Ce dépôt provient des matières volatiles ou d'autres matières en suspension souvent présentes dans l'atmosphère de la chambre de combustion et/ou du bloc ouvreau et qui parviennent jusqu'à l'injecteur aidés notamment par le biais des effets de recirculation des gaz de combustion à proximité de l'injecteur (comme illustré dans la figure 1).

En effet, la température de l'injecteur étant plus faible que celle du bloc ouvreau et a fortiori aussi de celle qui règne dans la chambre de combustion, les matières volatiles ont tendance à se condenser sur la paroi plus froide de l'injecteur. Cette condensation conduit à un dépôt de matière qui peut non seulement empiéter sur la zone à proximité de la sortie du fluide jusqu'à gêner voire empêcher l'injection correcte du fluide, mais elle peut aussi empiéter sur le bloc ouvreau avec un risque de le détériorer et/ou jusqu'à rendre difficile voire impossible la sortie de l'injecteur du bloc ouvreau lors de sa maintenance ou de son remplacement.

Ce phénomène de condensation se pose notamment dans des fours de fusion, tels que les fours de fusion de verre, et a été en particulier constaté dans les canaux des fours dits pour le conditionnement du verre (*Feeders* ou *Forehearths* en termes anglo-saxons), comme, par exemple, dans le cas des procédés de fabrication de fibre de verre.

En effet, des dépôts ont été constatés sur les injecteurs des brûleurs. Les analyses de ces dépôts ont montré qu'il s'agissait d'une part du verre fondu sur l'injecteur à proximité de son extrémité, et d'autre part d'éléments soufrés en amont de l'extrémité de l'injecteur.

Au-delà des coûts supplémentaires de maintenance que ce phénomène de condensation induit, le risque de détériorer l'injecteur et/ou le bloc ouvreau est significativement augmenté ; ce qui peut induire une fréquence plus grande de remplacement de ces équipements et a fortiori un surcoût financier pouvant être significatif, notamment pour le cas du conditionnement de verre où le nombre d'outils ou de brûleurs utilisés peut avoisiner plusieurs centaines.

La présente invention a pour objet de réduire, voire de supprimer ce phénomène de condensation de matières volatiles ou en suspension sur les injecteurs installés dans un bloc ouvreau.

La présente invention concerne en particulier un outil de combustion comportant un bloc ouvreau et un injecteur, ledit outil pouvant en particulier être un brûleur.

Le bloc ouvreau est un bloc en matière réfractaire non métallique. Il comporte une face d'entrée pour un combustible et/ou un comburant et une face de sortie à l'opposée de la face d'entrée. Le bloc définit un ouvreau qui débouche sur la face de sortie et un passage entre la face d'entrée et l'ouvreau. Le passage comporte une section de sortie en substance annulaire ou cylindrique ayant une entrée qui se situe dans ou qui est dirigée vers la face d'entrée et, à l'opposée de l'entrée, une sortie qui débouche sur l'ouvreau.

L'injecteur sert à transporter du combustible et/ou du comburant de la face d'entrée du bloc vers l'ouvreau. L'injecteur traverse le passage et a un nez qui se termine en une ouverture d'injection qui débouche dans l'ouvreau.

Selon l'invention, l'outil de combustion comprend également un fourreau comportant un manchon en substance cylindrique qui entoure l'injecteur au moins dans la section de sortie du passage. Le fourreau présente une extrémité aval qui débouche dans l'ouvreau.

Suivant l'invention, le bloc, l'injecteur et le manchon du fourreau sont tels que :
1) la différence Db - De entre, d'une part, le diamètre intérieur Db de la section de sortie du passage et d'autre part, le diamètre extérieur De du manchon en substance cylindrique du fourreau est supérieure ou égale à 0,4 mm et inférieure ou égale à 1,0 mm (0,4 mm ≤ Db - De ≤ 1,0 mm) ;
2) il existe un jeu ΔD de 0,2 mm à 0,4 mm entre le manchon en substance cylindrique du fourreau et l'injecteur ; et
3) la longueur Lf du manchon en substance cylindrique du fourreau entre l'entrée de la section de sortie du passage et l'extrémité aval du fourreau est inférieure ou égale à la longueur Linj de l'injecteur entre l'entrée de la section de sortie du passage et l'ouverture d'injection de l'injecteur mais supérieure ou égale à 0,8 fois cette longueur Linj de l'injecteur (0,8 x Linj ≤ Lf ≤ Linj), de préférence 0,9 x Linj ≤ Lf ≤ Linj.

Le bloc ouvreau est typiquement en matière réfractaire céramique.

Le bloc ouvreau peut être constitué d'une seule pièce en matière réfractaire non-métallique ou peut être constitué de plusieurs pièces.

La section de sortie du passage est avantageusement en substance cylindrique.

L'injecteur est généralement un injecteur métallique. Sa géométrie est généralement en substance cylindrique.

L'injecteur peut être un injecteur monotube comportant un seul tube d'injection de combustible et/ou comburant ou un injecteur multitubes comportant plusieurs tubes d'injection, tel qu'un injecteur dit « tube-dans-tube » (en anglais « pipe-in-pipe »).

Dans le cas d'un injecteur multitubes, le manchon du fourreau entoure le tube d'injection externe de l'injecteur au moins dans la section de sortie du passage.

La longueur Lf du manchon du fourreau est avantageusement égale à la longueur Linj de l'injecteur.

Quand l'outil de combustion ou le brûleur comporte plusieurs injecteurs pour combustible et/ou comburant et passages correspondants, plusieurs des dits passages, ou encore l'ensemble des dits passages, peuvent être équipés d'un fourreau et d'un injecteur de manière décrite ci-dessous.

Entre le manchon en substance cylindrique du fourreau et l'injecteur, la surface interne du manchon ou encore la surface externe de l'injecteur sont de manière utile munies de zones d'appui et de centrage en saillie qui supportent et centrent l'injecteur à l'intérieur du manchon, limitant ainsi le contact direct entre le manchon et l'injecteur.

Ainsi, quand la surface interne du manchon en substance cylindrique du fourreau est munie de zones d'appui et de centrage en saillie entre le manchon en substance cylindrique et l'injecteur, lesdites zones d'appui et de centrage couvrent avantageusement moins que 20%, de préférence moins que 15% et plus de préférence encore moins que 10% de la surface interne du manchon.

De manière analogue, quand la surface externe de l'injecteur est munie de zones d'appui et de centrage en saillie entre l'injecteur et le manchon, lesdites zones couvrent moins que 20%, de préférence moins que 15% et plus de préférence encore moins que 10% de la surface externe de l'injecteur.

En pratique, il est préféré que les zones d'appui et de centrage se situent sur la surface externe de l'injecteur.

Les zones d'appui et de centrage peuvent avoir des formes différentes. Elles peuvent par exemple être des zones annulaires en saillie, dont l'axe coïncide avec l'axe du manchon en substance cylindrique, respectivement de l'injecteur. Les zones d'appui peuvent également avoir la forme de pignons, ou toute autre forme appropriée pour le support et le centrage de l'injecteur à l'intérieur du manchon du fourreau.

Les zones d'appui et de centrage ont de préférence une épaisseur d de 1,0 mm à 4,0 mm, de préférence de 2,0 mm à 3,0 mm, l'épaisseur étant mesurée selon la direction radiale par rapport à l'axe longitudinale du manchon/de l'injecteur. Il est à noter que l'épaisseur des zones d'appui et de centrage ne fait pas partie du jeu ΔD entre le manchon et l'injecteur.

Le manchon peut être un manchon en acier.

Le manchon doit résister à des températures élevées, typiquement de l'ordre de 300 K en dessous de la température dans la chambre de combustion.

Le manchon est par conséquent avantageusement constitué d'un matériau céramique réfractaire ou d'un métal réfractaire.

Le terme « réfractaire » pour les métaux caractérise les métaux pouvant être utilisé à des températures supérieures ou du moins égales à 900°C.

Un manchon en acier réfractaire est préféré.

De manière avantageuse, le coefficient de dilatation de l'injecteur Cdinj est proche du coefficient de dilatation du manchon du fourreau Cdf. Ainsi il est souhaitable que 0,80 x Cdf ≤ Cdinj ≤ 1,05 x Cdf, de préférence 0,80 x Cdf ≤ Cdinj ≤ Cdf et encore de préférence 0,90 x Cdf ≤ Cdinj ≤ Cdf.

De préférence, le fourreau comprend également un ou plusieurs éléments d'ancrage fixant la position du fourreau par rapport à l'entrée de la section de sortie du passage.

Le fourreau peut, par exemple, comprendre un collet qui s'appuie, ou des ailettes qui s'appuient contre la face d'entrée du bloc ouvreau, en particulier quand l'entrée de la section de sortie se situe dans cette face.

Le passage du bloc ouvreau peut également comprendre une deuxième section en amont de la section de sortie et à plus grand diamètre que cette section de sortie, de manière à ce que l'entrée de la section de sortie se trouve entre cette deuxième section de plus grand diamètre et la section de sortie en substance annulaire ou cylindrique du passage. Dans ce cas, l'ancrage du fourreau peut être réalisé en une partie du fourreau, situé en amont du manchon et qui s'emboîte dans cette deuxième section du passage situé en amont de la section de sortie du passage. Le fourreau comprend alors typiquement une partie située en amont du manchon dont le diamètre extérieur est plus grand que le diamètre du manchon.

L'invention concerne également un four comportant des parois autour d'une chambre de combustion, ledit four comprenant au moins un outil de combustion ou en particulier au moins un brûleur suivant l'une quelconque des formes de réalisation décrites ci-dessus, ce au moins un outil de combustion ou brûleur étant installé dans au moins une desdites parois de telle manière que l'ouvreau débouche dans la chambre de combustion. L'outil de combustion ou le brûleur suivant l'invention est typiquement monté dans une paroi en matériau réfractaire du four.

Le four peut en particulier être un four de fusion de verre ou un canal pour le conditionnement du verre. L'outil de combustion ou le brûleur peut notamment être monté dans un four de fusion ou dans un canal de conditionnement de verre pour la fabrication de fibres de verre.

L'invention concerne également un procédé pour l'assemblage d'un outil de combustion, tel qu'un brûleur. Ledit outil de combustion ou brûleur comprend un injecteur pour combustible et/ou comburant ayant un nez qui se termine en une ouverture d'injection. L'outil est installé dans un bloc ouvreau en matière réfractaire non métallique présentant une face d'entrée pour un combustible et/ou un comburant et une face de sortie à l'opposée de la face d'entrée, ledit bloc ouvreau définissant un ouvreau qui débouche sur la face de sortie et un passage entre la face d'entrée et l'ouvreau, ledit passage comportant une section de sortie en substance annulaire ou cylindrique ayant une entrée dans ou dirigée vers la face d'entrée et, à l'opposée de l'entrée, une sortie qui débouche sur l'ouvreau.

Selon l'invention, on installe un fourreau comportant un manchon en substance cylindrique ayant une extrémité aval dans le passage du bloc de manière à ce que le manchon en substance cylindrique du fourreau entre dans la section de sortie du passage et à ce que l'extrémité aval du manchon débouche dans l'ouvreau.

On installe alors l'injecteur dans le passage du bloc ouvreau de manière à ce que :
1) l'injecteur traverse le passage,
2) l'ouverture d'injection débouche dans l'ouvreau, et
3) le manchon du fourreau entoure l'injecteur au moins dans la section de sortie du passage.

Comme déjà mentionné ci-dessus en rapport avec l'outil suivant l'invention, l'assemblage du brûleur se fait de telle manière :
1) que 0,4 mm ≤ Db - De ≤ 1,0 mm ;
2) qu'il existe un jeu ΔD de 0,2 mm à 0,4 mm entre le manchon en substance cylindrique du fourreau et l'injecteur ; et
3) que 0,8 x Linj ≤ Lf ≤ Linj, de préférence 0,9 x Linj ≤ Lf ≤ Linj.

Le bloc ouvreau est typiquement en matière réfractaire céramique.

La section de sortie du passage est avantageusement en substance cylindrique.

L'injecteur est généralement un injecteur métallique.

La longueur Lf du manchon du fourreau est avantageusement en substance égale à la longueur Linj de l'injecteur.

Afin de permettre à l'outil de fonctionner, on connecte l'injecteur selon le cas à une source de combustible ou à une source de comburant ou encore, quand l'injecteur est destiné à injecter à la fois du comburant et du combustible, à une source de comburant et à une source de combustible. Cette connexion est typiquement réalisée après le montage de l'injecteur dans le passage comme décrit ci-dessus.

Suivant l'invention, l'assemblage de l'outil peut être effectué quand le bloc ouvreau est monté dans une paroi d'une chambre de combustion d'un four.

Le bloc ouvreau peut notamment se situer dans une paroi d'un four de fusion de verre, et notamment dans une paroi d'un canal pour le conditionnement du verre.

Le procédé d'assemblage permet ainsi de transformer un outil, tel qu'un brûleur, préexistant d'une chambre de combustion/d'un four n'ayant pas un fourreau tel que décrit ci-dessus et étant donc susceptible de présenter un problème de dépôt sur l'injecteur en un outil ou brûleur suivant l'invention sans qu'il soit nécessaire de modifier ou de remplacer le bloc ouvreau dans la paroi.

Comme déjà indiqué, la surface interne du manchon en substance cylindrique du fourreau peut être munie de zones d'appui et de centrage en saillie entre le manchon en substance cylindrique et l'injecteur. Dans ce cas, lesdites zones d'appui et de centrage couvrent avantageusement moins que 20%, de préférence moins que 15% et plus de préférence encore moins que 10% de la surface interne du manchon en substance cylindrique.

De manière plus avantageuse, la surface externe de l'injecteur est munie de zones d'appui et de centrage en saillie entre l'injecteur et le manchon en substance cylindrique, lesdites zones d'appui et de centrage couvrant plus particulièrement moins que 20%, de préférence moins que 15% et plus de préférence encore moins que 10% de la surface externe de l'injecteur.

Les zones d'appui et de centrage ont avantageusement une épaisseur d de 1,0 mm à 4,0 mm, de préférence de 2,0 mm à 3,0 mm typiquement.

Le manchon peut être en acier, en céramique réfractaire ou en métal réfractaire. Un manchon en acier réfractaire est préféré.

De manière utile, le matériau du fourreau est choisi tel que 0,80 x Cdf ≤ Cdinj ≤ 1,05 x Cdf, de préférence 0,80 x Cdf ≤ Cdinj ≤ Cdf et encore de préférence 0,90 x Cdf ≤ Cdinj ≤ Cdf.

Comme décrit ci-dessus, le fourreau peut être équipé d'éléments d'ancrage.

L'invention concerne également un procédé pour l'installation d'un injecteur pour combustible et/ou comburant, ledit injecteur ayant un nez qui se termine en une ouverture d'injection.

Selon ce procédé, l'injecteur est installé dans un ensemble comprenant un bloc ouvreau en matière réfractaire non-métallique qui présente une face d'entrée pour un combustible et/ou un comburant et une face de sortie à l'opposée de la face d'entrée. Le bloc ouvreau définit un ouvreau qui débouche sur la face de sortie et un passage entre la face d'entrée et l'ouvreau. Le passage comporte une section de sortie en substance annulaire ou cylindrique ayant une entrée dans ou dirigée vers la face d'entrée et, à l'opposée de l'entrée, une sortie qui débouche sur l'ouvreau.

Cet ensemble comporte également un fourreau comportant un manchon en substance cylindrique ayant une extrémité aval, tel que :
1) la section de sortie du passage entoure le manchon du fourreau ;
2) l'extrémité aval du manchon débouche dans l'ouvreau ; et
3) 0,4 mm ≤ Db - De ≤ 1,0 mm.

Selon le procédé d'installation suivant l'invention, on monte l'injecteur dans le passage du bloc ouvreau de manière à ce que l'injecteur traverse le passage et débouche dans l'ouvreau et que le manchon du fourreau entoure l'injecteur au moins dans la section de sortie du passage, l'injecteur et le fourreau étant tel que :
1) il existe un jeu ΔD de 0,2 mm à 0,4 mm entre le manchon du fourreau et l'injecteur ; et
2) 0,8 x Linj ≤ Lf ≤ Linj, et de préférence 0,9 x Linj ≤ Lf ≤ Linj.

La section de sortie du passage est avantageusement en substance cylindrique.

Le bloc ouvreau est typiquement en matière réfractaire céramique.

L'injecteur est généralement un injecteur métallique.

La longueur Lf du manchon du fourreau est avantageusement égale à la longueur Linj de l'injecteur.

Pour permettre à l'outil ainsi obtenu de fonctionner, on connecte l'injecteur selon le cas à une source de combustible et/ou à une source de comburant.

L'installation de l'injecteur dans l'ensemble comportant le bloc et le fourreau peut notamment se faire quand le bloc ouvreau est déjà situé dans une paroi d'une chambre de combustion ou d'un four tel qu'un four de fusion de verre, la face de sortie du bloc étant alors dirigée vers la chambre de combustion. Le bloc peut plus particulièrement être situé dans une paroi d'un canal pour le conditionnement du verre.

Le procédé d'installation concerne ainsi en particulier le remplacement d'un injecteur présent dans un outil suivant l'invention déjà monté dans une paroi d'une chambre de combustion d'un four, par exemple dans le contexte de la maintenance d'un four ou pour remplacer un injecteur en défaillance. Dans ce cas, on enlève d'abord l'injecteur préexistant du passage du bloc avant l'installation du nouvel injecteur. En pratique, le remplacement de l'injecteur de l'outil a souvent lieu sans interruption du procédé de chauffage ou de fusion. Il est par conséquent important que l'installation de l'injecteur puisse être réalisée de manière rapide et fiable et en optimisant le centrage de l'injecteur dans le bloc ouvreau.

Quand la surface interne du manchon en substance cylindrique du fourreau est munie de zones d'appui et de centrage en saillie entre le manchon et l'injecteur, lesdites zones d'appui couvrent de préférence moins que 20%, de préférence moins que 15% et plus de préférence encore moins que 10% de la surface interne du manchon.

De manière analogue, quand la surface externe de l'injecteur est munie de zones d'appui et de centrage en saillie, ces zones d'appui couvrent avantageusement moins que 20%, de préférence moins que 15% et plus de préférence encore moins que 10% de la surface externe de l'injecteur.

Les zones d'appui et de centrage ont de manière utile une épaisseur d de 1,0 mm à 4,0 mm, de préférence de 2,0 mm à 3,0 mm.

Le manchon peut être en acier, en céramique réfractaire ou en métal réfractaire, de préférence en acier réfractaire.

Comme décrit ci-dessus, le fourreau peut comporter des éléments d'ancrage.

L'injecteur est réalisé avantageusement en un matériau tel que 0,80 x Cdf ≤ Cdinj ≤ 1,05 x Cdf, de préférence 0,80 x Cdf ≤ Cdinj ≤ Cdf et encore de préférence 0,90 x Cdf ≤ Cdinj ≤ Cdf.

L'outil, et notamment le brûleur, suivant l'invention présente de nombreux avantages.

En premier lieu, l'utilisation d'un fourreau adapté d'une part à la géométrie du bloc ouvreau et en particulier de son passage et d'autre part, à la géométrie de l'injecteur, permet d'isoler une grande partie de l'injecteur de l'atmosphère présente dans l'ouvreau. Le fourreau n'étant pas refroidi par le combustible et/ou le comburant traversant l'injecteur, sa température est proche de celle du bloc en début d'ouvreau, et le phénomène de condensation des matières sur l'injecteur susceptible de gêner l'injection correcte du ou des fluides est significativement réduit, voire supprimé. En général, aucun moyen de refroidissement n'est nécessaire pour le fourreau.

Par ailleurs, la présence du manchon autour de l'injecteur permet aussi d'utiliser un même modèle d'injecteur pour des blocs ouvreaux ayant des passages de dimensions différentes. Seul le diamètre extérieur du manchon du fourreau sera ainsi amené à varier pour s'adapter au diamètre du passage du bloc ouvreau considéré. Etant donné le coût plus faible du fourreau au regard de celui de l'injecteur, le fait de pouvoir standardiser l'injecteur permet de réduire significativement le coût de l'outil ou du brûleur.

La réduction voire la suppression de dépôts de matière sur l'injecteur a également comme avantage de faciliter la sortie de l'injecteur de l'outil. La réduction voire l'absence de dépôts sur l'injecteur réduit donc le risque d'abîmer le bloc ouvreau lors de l'enlèvement ou l'insertion de l'injecteur.

Par ailleurs, la présence du fourreau minimise les frottements entre l'injecteur et le bloc ouvreau lors des phases de maintenance ou de remplacement de l'injecteur. Ainsi, la durée de vie du bloc ouvreau s'en trouve prolongée.

De plus et suivant l'invention, quand l'injecteur doit être remplacé, le fourreau peut rester localisé dans le bloc ouvreau de telle sorte que le nouvel injecteur soit centré dès sa première mise en place dans le bloc ouvreau. Ceci permet de réaliser un gain de temps important et a fortiori un gain financier intéressant, notamment dans le cas du conditionnement de verre où le nombre d'outils ou de brûleurs utilisés sur un canal de conditionnement avoisine généralement plusieurs centaines.

En pratique, le matériau spécifique du manchon du fourreau, qui peut être réalisé en acier, en acier réfractaire ou en céramique réfractaire, est choisi de telle façon à ce que la dilatation thermique du matériau qui compose le manchon du fourreau, utilisé à haute température, soit cohérente et compatible avec les dilatations thermiques, d'une part du matériau composant le bloc ouvreau et d'autre part, du matériau composant l'injecteur. Parmi les aciers réfractaires pouvant être utilisés pour la fabrication du manchon, on note en particulier certains aciers inoxydables et des matériaux à base de Nickel comme l'INCONEL®.

Les règles de dimensionnement établies ci-dessus permettent :
- d'éviter un phénomène de grippage entre l'injecteur et le manchon du fourreau ;
- de désolidariser les deux éléments aisément, par exemple pour remplacer l'injecteur ;
- de réaliser un montage aisé du manchon du fourreau dans le passage du bloc ouvreau sans que l'on abîme ce dernier et avec un bon centrage du manchon dans le passage ;
- d'assurer un centrage adéquat de l'injecteur dans le manchon du fourreau et donc dans le passage du bloc et d'assurer par conséquent également le centrage de la flamme dans l'ouvreau réduisant ainsi le risque de détériorer ce dernier ; et
- d'éviter des contraintes mécaniques trop importantes sur les parois du bloc ouvreau, ce qui aurait pour conséquences de fragiliser voire détériorer le bloc ouvreau.

La présente invention sera mieux comprise à la lumière des exemples décrits ci-après, référence étant faite aux figures 1 à 5, dans lesquelles :
- la figure 1 est une représentation schématique en vue de coupe d'un brûleur selon l'état de la technique,
- la figure 2 est une représentation schématique en vue de coupe d'un brûleur suivant l'invention,
- la figure 3 est une représentation schématique en vue de coupe d'un brûleur suivant l'invention avec des zones d'appui et de centrage sur la surface externe de l'injecteur,
- les figures 4 et 5 sont des représentations schématiques en vue de coupe de deux brûleurs suivant l'invention munis d'éléments d'ancrage différents (géométries A et B).

La figure 1 montre les effets de recirculation et la condensation de dépôts sur l'injecteur d'un brûleur suivant l'état de la technique. On note que non seulement ces dépôts gênent l'injection correcte du fluide, avec notamment le risque de modifier la forme et l'orientation de la flamme, mais aussi qu'ils rendent également difficile le remplacement de l'injecteur et risquent d'abîmer le bloc ouvreau au niveau du passage lors d'un tel remplacement.

Le phénomène de dépôts sur l'injecteur peut être réduit, voire supprimé, en utilisant un brûleur ou un injecteur de comburant ou de combustible suivant l'invention tel qu'illustré dans la figure 2.

Comme montré dans cette figure, le bloc ouvreau 1 définit un ouvreau 11 qui débouche sur la face de sortie 13 (non montrée dans la figure 2).

Le bloc ouvreau définit également un passage entre la face d'entrée 12 du bloc et l'ouvreau 11.

Ce passage comporte (et dans le cas illustré dans la figure 2 : consiste en) une section de sortie en substance cylindrique 14 ayant une entrée 15 située dans le plan X-X et une sortie 16 située dans le plan Y-Y qui débouche dans l'ouvreau 11.

Dans la figure 2, l'entrée 15 de la section de sortie 14 se situe dans la face d'entrée 12 du bloc.

Le passage est traversé par un injecteur 2 de comburant et/ou de combustible. L'injecteur a un nez qui se termine en une ouverture d'injection 22 du comburant et/ou combustible dans l'ouvreau 11.

Le brûleur suivant l'invention comprend également un fourreau 3. Le fourreau comporte un manchon en substance cylindrique 31 qui entoure l'injecteur dans la section de sortie 14 du passage. L'extrémité aval 32 du fourreau 3 et donc aussi du manchon 31 débouche dans l'ouvreau 11.

On note que le fourreau 3 entoure l'injecteur à travers duquel le combustible et/ou comburant sont véhiculés et au moyen duquel ledit combustible et/ou ledit comburant sont injectés dans l'ouvreau.

Db est le diamètre intérieur de la section de sortie 14 du passage. De est le diamètre extérieur du manchon en substance cylindrique 31 du fourreau. La différence entre ces deux diamètres est de 0,4 à 1,0 mm.

Il existe également un jeu entre le manchon 31 en substance cylindrique du fourreau ayant un diamètre intérieur Di, et l'injecteur ayant un diamètre extérieur Do au niveau du manchon 31.

Ce jeu qui, dans le cas illustré correspond à Di-Do, est de 0,2 mm à 0,4 mm.

Lf est la longueur du manchon en substance cylindrique 31 du fourreau entre l'entrée 15 de la section de sortie 14 du passage et l'extrémité aval 32 du fourreau. De manière analogue, Linj est la longueur de l'injecteur entre l'entrée 15 de la section de sortie 14 et l'ouverture d'injection 22 de l'injecteur.

Dans la forme de réalisation illustrée dans la figure 2, Lf est légèrement inférieur à Linj.

Lors d'un procédé de chauffage, l'injecteur est refroidi par le fluide (comburant et/ou combustible) qu'il injecte. Le fourreau 3, qui n'est pas relié à une source de combustible et/ou de comburant et qui ne sert pas à véhiculer un fluide, ne subit pas un tel refroidissement. Par conséquent, le manchon 31 du fourreau 3 est à une température plus élevée que l'injecteur et le manchon 31, qui entoure tout ou presque la totalité de l'injecteur à partir de l'entrée 15 de la section de sortie 14 du passage, protège le nez de l'injecteur contre la condensation de dépôts.

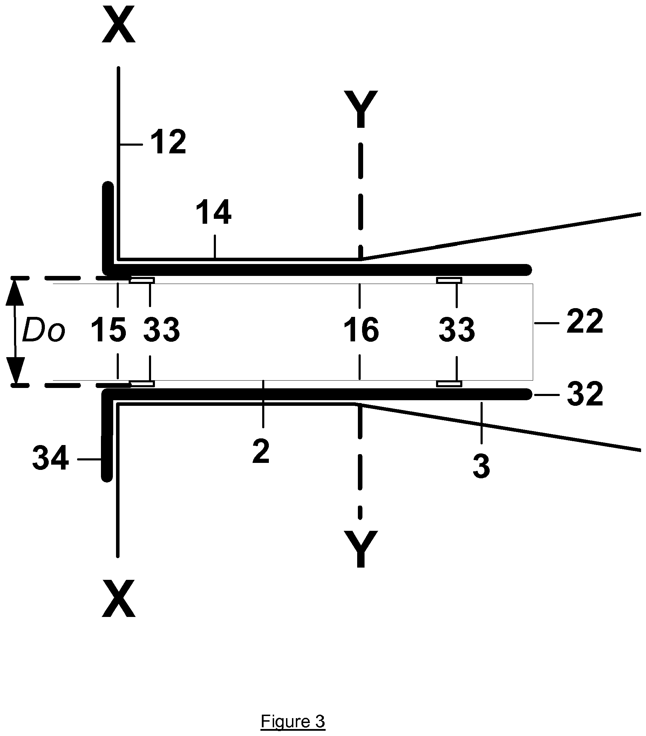

Comme illustré dans la figure 3, il est généralement utile de munir soit la surface intérieure du manchon 31 du fourreau 3, soit la surface extérieure de l'injecteur 2 au niveau du manchon 31 de zones d'appui et de centrage, ces zones d'appui se trouvant avantageusement sur la surface externe de l'injecteur comme illustré dans la figure 3.

La figure 3 montre plus particulièrement la forme de mise en oeuvre préférée dans laquelle les zones d'appui et de centrage 33 sont des zones annulaires en saillie sur la surface extérieure de l'injecteur 2. Elles ne couvrent qu'une faible fraction de cette surface.

L'épaisseur d desdites zones d'appui et de centrage se situe entre 1,0 mm et 4,00 mm, de préférence entre 2,0 et 3,0 mm. Grâce à ces zones d'appui et de centrage 33, le contact direct et donc l'échange thermique entre l'injecteur 2 plus froid et le manchon 31 plus chaud sont réduits.

Evidemment, la présence de telles zones d'appui et de centrage entre le manchon et l'injecteur réduit le jeu ΔD entre ces deux éléments. Par conséquent, l'épaisseur desdites zones 33 ne fait pas partie de ce jeu ΔD. Si on exprime le jeu en termes de Di-Do, il convient donc de considérer comme diamètre interne du manchon Di le diamètre intérieur libre du manchon au niveau desdites zones 33, si elles sont situées sur la surface interne du manchon où, quand, comme dans le cas illustré dans la figure 2, les zones 33 se trouvent sur la surface extérieure de l'injecteur, de considérer comme diamètre extérieur de l'injecteur, le diamètre extérieur de l'injecteur au niveau desdites zones, zones 33 comprises.

On note que, dans le cas illustré dans la figure 3, la longueur Lf du manchon est égale à la longueur Linj de l'injecteur.

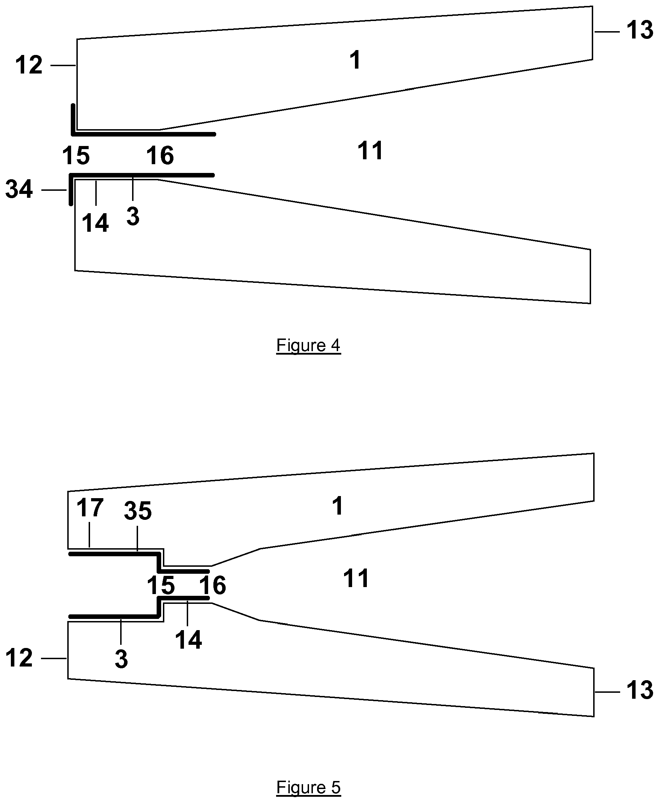

Les figures 3 et 4 montrent un système d'ancrage d'un fourreau 3 dans un bloc ouvreau selon une forme de réalisation dans laquelle le passage consiste en une section de sortie 14 en substance cylindrique, l'entrée de cette section de sortie étant située dans la face d'entrée du bloc ouvreau. Une telle forme de réalisation est appelée « géométrie A ».

Le fourreau 3 comporte plus particulièrement un collet 34 qui s'appuie contre la face d'entrée du bloc ouvreau de manière à retenir le fourreau de ce côté du bloc ouvreau et d'éviter que le fourreau puisse se détacher et glisser vers l'ouvreau, voire glisser dans la chambre de combustion.

La figure 5 montre un autre système d'ancrage du fourreau 3 dans un bloc ouvreau selon une forme de réalisation dans laquelle le passage comporte une deuxième section 17 en amont de la section de sortie 14 et ayant un diamètre plus large que la section de sortie 14. Une telle forme de réalisation est appelée « géométrie B ».

L'ancrage du fourreau 3 est réalisé en ce que le fourreau 3 comporte une partie 35, située en amont du manchon 31, qui s'emboîte dans la section 17 du passage. Du fait que cette partie 35 a un diamètre extérieur plus grand que le diamètre intérieur de la section de sortie du passage, la position du fourreau est fixée par rapport à l'entrée de la section de sortie du passage de manière à ce que le fourreau ne puisse pas se détacher et glisser vers l'ouvreau ou la chambre de combustion.

La pertinence des matériaux et des dimensions a été vérifiée expérimentalement lors d'essais pilotes et industriels pendant plus d'une dizaine de mois.

Les dimensions du brûleur utilisé étaient :
∘ diamètre D de l'ouverture d'injection de l'injecteur = 16 mm.
∘ Diamètre extérieur Do de l'injecteur au niveau du manchon = 19 mm.
∘ Zones d'appui et de centrage : deux zones annulaires en acier INOX d'épaisseur identique et constante sur toute la circonférence de l'injecteur.
∘ Diamètre intérieur Di du manchon du fourreau = 19,3 mm.
∘ Diamètre extérieur De du manchon = 25,5 mm.
∘ Diamètre intérieur Db de la section de sortie du passage = 26,1 mm.
∘ Longueur Lf du manchon du fourreau = longueur de l'injecteur Linj (à partir de l'entrée de la section de sortie du passage) = 65 mm.

Les matériaux utilisés étaient :
∘ Pour le fourreau entier (y compris le manchon) : INCONEL.
∘ Pour l'injecteur : ACIER INOX.
∘ Pour le bloc ouvreau (géométrie de type A) : AZS (Alumine - Zircone - Silice).

Les essais industriels ont été réalisés dans un canal pour le conditionnement de fibres de verre de renforcement. Ils ont permis de mettre en évidence la pertinence de l'invention explicitée dans la présente.

En effet, la formation de dépôt de matières sur les injecteurs en quantité relativement importante requérant le nettoyage desdits injecteurs a pu être constatée après l'utilisation pendant quelques semaines de brûleurs sans fourreau de protection. Par contre, l'ajout d'un fourreau autour de l'injecteur conformément à la présente invention a permis d'utiliser les mêmes injecteurs dans la même configuration industrielle pendant plusieurs mois sans que ce phénomène ne réapparaisse.

Bien que les exemples ci-dessus concernent des brûleurs suivant l'invention, il est évident que les différents aspects de l'invention décrits ci-dessus s'appliquent également aux outils suivant l'invention autres que les brûleurs.

## Revendications

1. Outil de combustion comportant :
• un bloc ouvreau (1) en matière réfractaire non-métallique présentant une face d'entrée (12) pour un combustible et/ou un comburant et une face de sortie (13) à l'opposée de la face d'entrée, ledit bloc ouvreau définissant un ouvreau (11) qui débouche sur la face de sortie (13) et un passage entre la face d'entrée (12) et l'ouvreau (11), ledit passage comportant une section de sortie (14) en substance annulaire ou cylindrique ayant une entrée (15) dans ou dirigée vers la face d'entrée (12) et, à l'opposée de l'entrée (15), une sortie qui débouche sur l'ouvreau (11),
• un injecteur pour le transport de combustible et/ou comburant de la face d'entrée (15) du bloc (1) vers l'ouvreau (11), ledit injecteur (2) traversant le passage et ayant un nez qui se termine en une ouverture d'injection (22) qui débouche dans l'ouvreau (11),
**caractérisé en ce que** l'outil comprend également un fourreau (3) comportant un manchon (31) en substance cylindrique qui entoure l'injecteur (2) dans la section de sortie (14) du passage et qui présente une extrémité aval (32) qui débouche dans l'ouvreau (11),
tel que :
• 0,4 mm ≤ Db - De ≤ 1,0 mm, Db étant le diamètre intérieur de la section de sortie (14) du passage et De étant le diamètre extérieur du manchon (31) du fourreau (3) ;
• il existe un jeu ΔD de 0,2 mm à 0,4 mm entre le manchon (31) du fourreau (3) et l'injecteur (2) ;
• 0,8 x Linj ≤ Lf ≤ Linj, Lf étant la longueur du manchon (31) du fourreau (3) entre l'entrée (15) de la section de sortie (14) du passage et l'extrémité aval (32) du fourreau, Linj étant la longueur de l'injecteur (2) entre l'entrée (15) de la section de sortie (14) du passage et l'ouverture d'injection (22) de l'injecteur (2), de préférence 0,9 x Linj ≤ Lf ≤ Linj.

2. Outil suivant la revendication 1, dans lequel la surface interne du manchon (31) est munie de zones d'appui et de centrage en saillie entre le manchon (31) et l'injecteur (2), lesdites zones d'appui et de centrage couvrant moins que 20%, de préférence moins que 15% et plus de préférence encore moins que 10% de la surface interne du manchon (31) en substance cylindrique, lesdites zones d'appui et de centrage ayant de préférence une épaisseur d de 1,0 mm à 2,0 mm.

3. Outil suivant la revendication 1, dans lequel la surface externe de l'injecteur (2) est munie de zones d'appui et de centrage (33) en saillie entre l'injecteur (2) et le manchon (31), lesdites zones d'appui et de centrage couvrant moins que 20%, de préférence moins que 15% et plus de préférence encore moins que 10% de la surface externe de l'injecteur (2), lesdites zones d'appui et de centrage ayant de préférence une épaisseur d de 1,0 mm à 2,0 mm.

4. Outil suivant l'une des revendications précédentes, dans lequel le manchon (31) du fourreau (3) est en céramique réfractaire ou en métal réfractaire, de préférence en acier réfractaire.

5. Outil suivant l'une des revendications précédentes, dans lequel le fourreau (3) comprend des moyens d'ancrage (34, 35) fixant la position du fourreau (3) par rapport à l'entrée (15) de la section de sortie (14) du passage.

6. Four comportant des parois autour d'une chambre de combustion et au moins un outil suivant l'une quelconque des revendications précédentes monté dans au moins une desdites parois de telle manière que l'ouvreau (11) débouche dans la chambre de combustion.

7. Four de fusion suivant la revendication 6, ledit four étant un four de fusion de verre ou un canal pour le conditionnement du verre.

8. Procédé pour l'assemblage d'un outil comprenant :
• un injecteur (2) pour combustible et/ou comburant ayant un nez qui se termine en une ouverture d'injection (22) et
• un bloc ouvreau (1) en matière réfractaire non-métallique présentant une face d'entrée (12) pour un combustible et/ou un comburant et une face de sortie (13) à l'opposée de la face d'entrée, ledit bloc ouvreau (1) définissant un ouvreau (11) qui débouche sur la face de sortie (13) et un passage entre la face d'entrée (12) et l'ouvreau (11), ledit passage comportant une section de sortie (14) en substance annulaire ou cylindrique ayant une entrée (15) dans ou dirigée vers la face d'entrée (12) et, à l'opposée de l'entrée (15), une sortie (16) qui débouche sur l'ouvreau (11),
le procédé étant **caractérisé en ce que** :
• on installe un fourreau (3) comportant un manchon (31) en substance cylindrique ayant une extrémité aval (32) dans le passage de manière à ce que le manchon (31) entre dans la section de sortie (14) du passage et que l'extrémité aval (32) débouche dans l'ouvreau (11) ; et
• on installe l'injecteur (2) dans le passage de manière à ce que l'injecteur (2) traverse le passage et débouche dans l'ouvreau (11) et que le manchon (31) du fourreau (3) entoure l'injecteur (2) dans la section de sortie (14) du passage,
tel que :
• 0,4 mm ≤ Db - De ≤ 1,0 mm, Db étant le diamètre intérieur de la section de sortie (14) du passage et De étant le diamètre extérieur du manchon (31) du fourreau (3) ;
• il existe un jeu ΔD de 0,2 mm à 0,4 mm entre le manchon (31) du fourreau (3) et l'injecteur (2) ;
• 0,8 x Linj ≤ Lf ≤ Linj, Lf étant la longueur du manchon (31) du fourreau (3) entre l'entrée (15) de la section de sortie (14) du passage et l'extrémité aval du fourreau (32), Linj étant la longueur de l'injecteur (2) entre l'entrée (15) de la section de sortie (14) du passage et l'ouverture d'injection (22) de l'injecteur (2), de préférence 0,9 x Linj ≤ Lf ≤ Linj.

9. Procédé pour l'installation d'un injecteur pour combustible et/ou comburant, ledit injecteur ayant un nez qui se termine en une ouverture d'injection,
procédé dans lequel on installe l'injecteur dans un ensemble comprenant :
∘ un bloc ouvreau (1) en matière réfractaire non-métallique qui présente une face d'entrée (12) pour un combustible et un comburant et une face de sortie (13) à l'opposée de la face d'entrée (12), le bloc ouvreau (1) définissant un ouvreau (11) qui débouche sur la face de sortie (13) et un passage entre la face d'entrée (12) et l'ouvreau (11), ledit passage comportant une section de sortie (14) en substance annulaire ou cylindrique ayant une entrée (15) dans ou dirigée vers la face d'entrée (12) et, à l'opposée de l'entrée (15), une sortie (16) qui débouche sur l'ouvreau (11) ; et
∘ un fourreau (3) comportant un manchon (31) en substance cylindrique ayant une extrémité aval (32), tel que :
- la section de sortie (14) du passage entoure le manchon (31) du fourreau (3) ;
- l'extrémité aval (32) du manchon (31) débouche dans l'ouvreau (11) ; et
- 0,4 mm ≤ Db - De ≤ 1,0 mm, Db étant le diamètre intérieur de la section de sortie (14) du passage et De étant le diamètre extérieur du manchon (31) du fourreau (3) ;
l'injecteur (2) étant installé dans le passage du bloc ouvreau (1) de manière à ce que l'injecteur (2) traverse le passage et débouche dans l'ouvreau (11) et que le manchon du fourreau (3) entoure l'injecteur (2) au moins dans la section de sortie (14) du passage, l'injecteur (2) et le fourreau (3) étant tels que :
- il existe un jeu ΔD de 0,2 mm à 0,4 mm entre le manchon (31) du fourreau (3) et l'injecteur (2) ; et
- 0,8 x Linj ≤ Lf ≤ Linj, Lf étant la longueur du manchon (31) du fourreau (3) entre l'entrée de la section de sortie (14) du passage et l'extrémité aval (32) du fourreau (3), Linj étant la longueur de l'injecteur (2) entre l'entrée (15) de la section de sortie (14) du passage et l'ouverture d'injection (22) de l'injecteur (2), de préférence 0,9 x Linj ≤ Lf ≤ Linj.

10. Procédé suivant l'une des revendications 8 et 9, dans lequel on connecte l'injecteur (2) à une source de combustible et/ou à une source de comburant.

11. Procédé suivant l'une des revendications 8 à 10, dans lequel le bloc ouvreau (1) se situe dans une paroi d'une chambre de combustion, de préférence dans une paroi d'un four de fusion de verre ou d'un canal pour le conditionnement du verre.

12. Procédé suivant l'une des revendications 8 à 11, dans lequel la surface interne du manchon (31) est munie de zones d'appui et de centrage en saillie entre le manchon (31) et l'injecteur (2), lesdites zones d'appui couvrant moins que 20%, de préférence moins que 15% et plus de préférence encore moins que 10% de la surface interne du manchon (31), lesdites zones d'appui et de centrage ayant de préférence une épaisseur d de 1,0 mm à 2,0 mm.

13. Procédé suivant l'une des revendications 8 à 11, dans lequel la surface externe de l'injecteur (2) est munie de zones d'appui et de centrage (33) en saillie entre l'injecteur (2) et le manchon (31), lesdites zones d'appui et de centrage (33) couvrant moins que 20%, de préférence moins que 15% et plus de préférence encore moins que 10% de la surface externe de l'injecteur (2), lesdites zones d'appui et de centrage ayant de préférence une épaisseur d de 1,0 mm à 2,0 mm.

14. Procédé suivant l'une des revendications 8 à 13, dans lequel le manchon (31) du fourreau (3) est en céramique réfractaire ou en métal réfractaire, de préférence en acier réfractaire.

15. Procédé suivant l'une des revendications 8 à 14, dans lequel le fourreau (3) comprend des moyens d'ancrage (34, 35) pour fixer la position du fourreau (3) par rapport à l'entrée (15) de la section de sortie (14) du passage.

## Patentansprüche

1. Verbrennungswerkzeug, umfassend:
• einen Arbeitsöffnungsblock (1) aus einem feuerbeständigen, nicht metallischen Material, der eine Eingangsseite (12) für einen Brennstoff und/oder ein Oxidationsmittel und eine Ausgangsseite (13) gegenüber der Eingangsseite aufweist, wobei der Arbeitsöffnungsblock eine Arbeitsöffnung (11), die auf die Ausgangsseite (13) mündet, und einen Durchgang zwischen der Eingangsseite (12) und der Arbeitsöffnung (11) definiert, wobei der Durchgang einen im Wesentlichen ringförmigen oder zylindrischen Ausgangsabschnitt (14) umfasst, der einen Eingang (15) in der Eingangsseite (12) aufweist oder dieser zugewandt ist, und gegenüber dem Eingang (15) einen Ausgang, der auf die Arbeitsöffnung (11) mündet, aufweist,
• eine Einspritzdüse zum Transport von Brennstoff und/oder eines Oxidationsmittels von der Eingangsseite (15) des Blocks (1) zu der Arbeitsöffnung (11), wobei die Einspritzdüse (2) durch den Durchgang geht und eine Nase aufweist, die in einer Einspritzöffnung (22) endet, die auf die Arbeitsöffnung (11) mündet,
**dadurch gekennzeichnet, dass** das Werkzeug auch eine Hülse (3) umfasst, die eine im Wesentlichen zylindrische Muffe (31) umfasst, welche die Einspritzdüse (2) in dem Ausgangsabschnitt (14) des Durchgangs umgibt und die ein stromabwärtiges Ende (32) aufweist, das auf die Arbeitsöffnung (11) mündet,
so dass:
• 0,4 mm ≤ Db - De ≤ 1,0 mm, wobei Db der Innendurchmesser des Ausgangsabschnitts (14) des Durchgangs ist und De der Außendurchmesser der Muffe (31) der Hülse (3) ist;
• ein Spiel ΔD von 0,2 mm bis 0,4 mm zwischen der Muffe (31) der Hülse (3) und der Einspritzdüse (2) besteht;
• 0,8 x Linj ≤ Lf ≤ Linj, wobei Lf die Länge der Muffe (31) der Hülse (3) zwischen dem Eingang (15) des Ausgangsabschnitts (14) des Durchgangs und dem stromabwärtigen Ende (32) der Hülse ist, Linj die Länge der Einspritzdüse (2) zwischen dem Eingang (15) des Ausgangsabschnitts (14) des Durchgangs und der Einspritzöffnung (22) der Einspritzdüse (2) ist, wobei bevorzugt 0,9 x Linj ≤ Lf ≤ Linj.

2. Werkzeug nach Anspruch 1, wobei die interne Oberfläche der Muffe (31) mit Stütz- und Zentrierzonen versehen ist, die zwischen der Muffe (31) und der Einspritzdüse (2) vorstehen, wobei die Stütz- und Zentrierzonen weniger als 20 %, bevorzugt weniger als 15 % und noch weiter bevorzugt weniger als 10 % der internen Oberfläche der im Wesentlichen zylindrischen Muffe (31) abdecken, wobei die Stütz- und Zentrierzonen bevorzugt eine Dicke d von 1,0 mm bis 2,0 mm aufweisen.

3. Werkzeug nach Anspruch 1, wobei die externe Oberfläche der Einspritzdüse (2) mit Stütz- und Zentrierzonen (33) versehen ist, die zwischen der Einspritzdüse (2) und der Muffe (31) vorstehen, wobei die Stütz- und Zentrierzonen weniger als 20 %, bevorzugt weniger als 15 % und noch weiter bevorzugt weniger als 10 % der externen Oberfläche der Einspritzdüse (2) abdecken, wobei die Stütz- und Zentrierzonen bevorzugt eine Dicke d von 1,0 mm bis 2,0 mm aufweisen.

4. Werkzeug nach einem der vorstehenden Ansprüche, wobei die Muffe (31) der Hülse (3) aus feuerbeständiger Keramik oder aus feuerbeständigem Metall, bevorzugt aus feuerbeständigem Stahl besteht.

5. Werkzeug nach einem der vorstehenden Ansprüche, wobei die Hülse (3) Verankerungsmittel (34, 35) umfasst, welche die Position der Hülse (3) im Verhältnis zum Eingang (15) des Ausgangsabschnitts (14) des Durchgangs festlegen.

6. Ofen, umfassend Wände um eine Brennkammer herum und mindestens ein Werkzeug nach einem der vorstehenden Ansprüche, das in mindestens einer der Wände derart eingebaut ist, dass die Arbeitsöffnung (11) auf die Brennkammer mündet.

7. Schmelzofen nach Anspruch 6, wobei der Ofen ein Glasschmelzofen oder ein Kanal zur Aufbereitung von Glas ist.

8. Verfahren zum Zusammenbauen eines Werkzeugs, das Folgendes umfasst:
• eine Einspritzdüse (2) für Brennstoff und/oder ein Oxidationsmittel, die eine Nase aufweist, die in einer Einspritzöffnung (22) endet, und
• einen Arbeitsöffnungsblock (1) aus einem feuerbeständigen, nicht metallischen Material, der eine Eingangsseite (12) für einen Brennstoff und/oder ein Oxidationsmittel und eine Ausgangsseite (13) gegenüber der Eingangsseite aufweist, wobei der Arbeitsöffnungsblock (1) eine Arbeitsöffnung (11), die auf die Ausgangsseite (13) mündet, und einen Durchgang zwischen der Eingangsseite (12) und der Arbeitsöffnung (11) definiert, wobei der Durchgang einen im Wesentlichen ringförmigen oder zylindrischen Ausgangsabschnitt (14) umfasst, der einen Eingang (15) in der Eingangsseite (12) aufweist oder dieser zugewandt ist, und gegenüber dem Eingang (15) einen Ausgang (16), der auf die Arbeitsöffnung (11) mündet, aufweist,
wobei das Verfahren durch folgende Schritte gekennzeichnet ist:
• Installieren einer Hülse (3), die eine im Wesentlichen zylindrische Muffe (31) umfasst und ein stromabwärtiges Ende (32) aufweist, in dem Durchgang, so dass die Muffe (31) in den Ausgangsabschnitt (14) des Durchgangs eintritt und dass das stromabwärtige Ende (32) auf die Arbeitsöffnung (11) mündet; und
• Installieren der Einspritzdüse (2) in dem Durchgang, so dass die Einspritzdüse (2) durch den Durchgang hindurch geht und auf die Arbeitsöffnung (11) mündet und dass die Muffe (31) der Hülse (3) die Einspritzdüse (2) in dem Ausgangsabschnitt (14) des Durchgangs umgibt,
so dass:
• 0,4 mm ≤ Db - De ≤ 1,0 mm, wobei Db der Innendurchmesser des Ausgangsabschnitts (14) des Durchgangs ist und De der Außendurchmesser der Muffe (31) der Hülse (3) ist;
• ein Spiel ΔD von 0,2 mm bis 0,4 mm zwischen der Muffe (31) der Hülse (3) und der Einspritzdüse (2) besteht;
• 0,8 x Linj ≤ Lf ≤ Linj, wobei Lf die Länge der Muffe (31) der Hülse (3) zwischen dem Eingang (15) des Ausgangsabschnitts (14) des Durchgangs und dem stromabwärtigen Ende (32) der Hülse ist, Linj die Länge der Einspritzdüse (2) zwischen dem Eingang (15) des Ausgangsabschnitts (14) des Durchgangs und der Einspritzöffnung (22) der Einspritzdüse (2) ist, wobei bevorzugt 0,9 x Linj ≤ Lf ≤ Linj.

9. Verfahren zur Installation einer Einspritzdüse für Brennstoff und/oder ein Oxidationsmittel, wobei die Einspritzdüse eine Nase aufweist, die in einer Einspritzöffnung endet,
wobei bei dem Verfahren die Einspritzdüse in einer Baugruppe installiert wird, die Folgendes umfasst:
o einen Arbeitsöffnungsblock (1) aus einem feuerbeständigen, nicht metallischen Material, der eine Eingangsseite (12) für einen Brennstoff und/oder ein Oxidationsmittel und eine Ausgangsseite (13) gegenüber der Eingangsseite (12) aufweist, wobei der Arbeitsöffnungsblock (1) eine Arbeitsöffnung (11), die auf die Ausgangsseite (13) mündet, und einen Durchgang zwischen der Eingangsseite (12) und der Arbeitsöffnung (11) definiert, wobei der Durchgang einen im Wesentlichen ringförmigen oder zylindrischen Ausgangsabschnitt (14) umfasst, der einen Eingang (15) in der Eingangsseite (12) aufweist oder dieser zugewandt ist, und gegenüber dem Eingang (15) einen Ausgang (16), der auf die Arbeitsöffnung (11) mündet, aufweist,
o eine Hülse (3), die eine im Wesentlichen zylindrische Muffe (31) umfasst, die ein stromabwärtiges Ende (32) aufweist, so dass:
- der Ausgangsabschnitt (14) des Durchgangs die Muffe (31) der Hülse (3) umgibt;
- das stromabwärtige Ende (32) der Hülse (31) auf die Arbeitsöffnung (11) mündet; und
- 0,4 mm ≤ Db - De ≤ 1,0 mm, wobei Db der Innendurchmesser des Ausgangsabschnitts (14) des Durchgangs ist und De der Außendurchmesser der Muffe (31) der Hülse (3) ist;
wobei die Einspritzdüse (2) in dem Durchgang des Arbeitsöffnungsblocks (1) installiert ist, so dass die Einspritzdüse (2) durch den Durchgang hindurch geht und auf die Arbeitsöffnung (11) mündet und dass die Muffe der Hülse (3) die Einspritzdüse (2) in dem Ausgangsabschnitt (14) des Durchgangs umgibt, wobei die Einspritzdüse (2) und die Hülse (3) derart sind, dass:
- ein Spiel ΔD von 0,2 mm bis 0,4 mm zwischen der Muffe (31) der Hülse (3) und der Einspritzdüse (2) besteht; und
- 0,8 x Linj ≤ Lf ≤ Linj, wobei Lf die Länge der Muffe (31) der Hülse (3) zwischen dem Eingang des Ausgangsabschnitts (14) des Durchgangs und dem stromabwärtigen Ende (32) der Hülse (3) ist, Linj die Länge der Einspritzdüse (2) zwischen dem Eingang (15) des Ausgangsabschnitts (14) des Durchgangs und der Einspritzöffnung (22) der Einspritzdüse (2) ist, wobei bevorzugt 0,9 x Linj ≤ Lf ≤ Linj.

10. Verfahren nach einem der Ansprüche 8 und 9, wobei die Einspritzdüse (2) mit einer Brennstoffquelle und/oder einer Oxidationsmittelquelle verbunden wird.

11. Verfahren nach einem der Ansprüche 8 bis 10, wobei sich der Arbeitsöffnungsblock (1) in einer Wand einer Verbrennungskammer befindet, bevorzugt in einer Wand eines Glasschmelzofens oder eines Kanals zur Aufbereitung von Glas.

12. Verfahren nach einem der Ansprüche 8 bis 11, wobei die interne Oberfläche der Muffe (31) mit Stütz- und Zentrierzonen versehen ist, die zwischen der Muffe (31) und der Einspritzdüse (2) vorstehen, wobei die Stütz- und Zentrierzonen weniger als 20 %, bevorzugt weniger als 15 % und noch weiter bevorzugt weniger als 10 % der internen Oberfläche der Muffe (31) abdecken, wobei die Stütz- und Zentrierzonen bevorzugt eine Dicke d von 1,0 mm bis 2,0 mm aufweisen.

13. Verfahren nach einem der Ansprüche 8 bis 11, wobei die externe Oberfläche der Einspritzdüse (2) mit Stütz- und Zentrierzonen (33) versehen ist, die zwischen der Einspritzdüse (2) und der Muffe (31) vorstehen, wobei die Stütz- und Zentrierzonen (33) weniger als 20 %, bevorzugt weniger als 15 % und noch weiter bevorzugt weniger als 10% der externen Oberfläche der Einspritzdüse (2) abdecken, wobei die Stütz- und Zentrierzonen bevorzugt eine Dicke d von 1,0 mm bis 2,0 mm aufweisen.

14. Verfahren nach einem der Ansprüche 8 bis 13, wobei die Muffe (31) der Hülse (3) aus feuerbeständiger Keramik oder aus feuerbeständigem Metall, bevorzugt aus feuerbeständigem Stahl besteht.

15. Verfahren nach einem der Ansprüche 8 bis 14, wobei die Hülse (3) Verankerungsmittel (34, 35) umfasst, um die Position der Hülse (3) im Verhältnis zum Eingang (15) des Ausgangsabschnitts (14) des Durchgangs festzulegen.

## Claims

1. Combustion tool comprising:
• a quarl block (1) made from non-metallic refractory material, having an inlet face (12) for a fuel and/or an oxidant and an outlet face (13) opposite to the inlet face, said quarl block defining a port hole (11) that emerges on the outlet face (13) and a passage between the inlet face (12) and the port hole (11), said passage comprising an outlet section (14) made from an annular or cylindrical substance having an inlet (15) in or directed towards the inlet face (12) and, opposite to the inlet (15), an outlet that emerges on the port hole (11),
• an injector for transporting fuel and/or oxidant from the inlet face (15) of the block (1) to the port hole (11), said injector (2) passing through the passage and having a nose that terminates in an injection opening (22) that emerges in the port hole (11),
**characterised in that** the tool also comprises a sheath (3) comprising a sleeve (31) made from a cylindrical substance that surrounds the injector (2) in the outlet section (14) of the passage and has a downstream end (32) that emerges in the port hole (11),
such that:
• 0.4 mm ≤ Db - De ≤ 1.0 mm, Db being the inside diameter of the outlet section (14) of the passage and De being the outside diameter of the sleeve (31) of the sheath (3);
• there exists a clearance ΔD of 0.2 mm to 0.4 mm between the sleeve (31) of the sheath (3) and the injector (2);
• 0.8 x Linj ≤ Lf ≤ Linj, Lf being the length of the sleeve (31) of the sheath (3) between the inlet (15) of the outlet section (14) of the passage and the downstream end (32) of the sheath, Linj being the length of the injector (2) between the inlet (15) of the outlet section (14) of the passage and the injection opening (22) of the injector (2), preferably 0.9 x Linj ≤ Lf ≤ Linj.

2. Tool according to claim 1, in which the internal surface of the sleeve (31) is provided with support and centring zones projecting between the sleeve (31) and the injector (2), said support and centring zones covering less than 20%, preferably less than 15% and more preferably still less than 10% of the internal surface of the sleeve (31) made from a cylindrical substance, said support and centring zones preferably having a thickness d of 1.0 mm to 2.0 mm.

3. Tool according to claim 1, in which the external surface of the injector (2) is provided with support and centring zones (33) projecting between the injector (2) and the sleeve (31), said support and centring zones covering less than 20%, preferably less than 15% and more preferably still less than 10% of the external surface of the injector (2), said support and centring zones preferably having a thickness d of 1.0 mm to 2.0,mm.

4. Tool according to any of the preceding claims, in which the sleeve (31) of the sheath (3) is made from refractory ceramic or refractory metal, preferably refractory steel.

5. Tool according to any of the preceding claims, in which the sheath (3) comprises anchoring means (34, 35) fixing the position of the sheath (3) with respect to the inlet (15) of the outlet section (14) of the passage.

6. Furnace comprising walls around a combustion chamber and at least one tool according to any of the preceding claims mounted in at least one of said walls so that the port hole (11) emerges in the combustion chamber.

7. Melting furnace according to claim 6, said furnace being a glass-melting furnace or a channel for conditioning the glass.

8. Method for assembling a tool comprising:
• an injector (2) for fuel and/or oxidant having a nose that terminates in an injection opening (22), and
• a quarl block (1) made from non-metallic refractory material, having an inlet face (12) for a fuel and/or an oxidant and an outlet face (13) opposite to the inlet face, said quarl block (1) defining a port hole (11) that emerges on the outlet face (13) and a passage between the inlet face (12) and the port hole (11), said passage comprising an outlet section (14) made from an annular or cylindrical substance having an inlet (15) in or directed towards the inlet face (12) and, opposite to the inlet (15), an outlet (16) that emerges on the port hole (11),
the method being **characterised in that**:
• a sheath (3) comprising a sleeve (31) made from a cylindrical substance having a downstream end (32) is installed in the passage so that the sleeve (31) enters the outlet section (14) of the passage and so that the downstream end (32) emerges in the port hole (11); and
• the injector (2) is installed in the passage so that the injector (2) passes through the passage and emerges in the port hole (11) and so that the sleeve (31) of the sheath (3) surrounds the injector (2) in the outlet section (14) of the passage,
so that:
• 0.4 mm ≤ Db - De ≤ 1.0 mm, Db being the inside diameter of the outlet section (14) of the passage and De being the outside diameter of the sleeve (31) of the sheath (3);
• there exists a clearance ΔD of 0.2 mm to 0.4 mm between the sleeve (31) of the sheath (3) and the injector (2);
• 0.8 x Linj ≤ Lf ≤ Linj, Lf being the length of the sleeve (31) of the sheath (3) between the inlet (15) of the outlet section (14) of the passage and the downstream end (32) of the sheath, Linj being the length of the injector (2) between the inlet (15) of the outlet section (14) of the passage and the injection opening (22) of the injector (2), preferably 0.9 x Linj ≤ Lf ≤ Linj.

9. Method for installing an injector for fuel and/or oxidant, said injector having a nose that terminates in an injection opening,
a method in which the injector is installed in an assembly comprising:
• a quarl block (1) made from non-metallic refractory material, having an inlet face (12) for a fuel and/or an oxidant and an outlet face (13) opposite to the inlet face (12), the quarl block (1) defining a port hole (11) that emerges on the outlet face (13) and a passage between the inlet face (12) and the port hole (11), said passage comprising an outlet section (14) made from an annular or cylindrical substance having an inlet (15) in or directed towards the inlet face (12) and, opposite to the inlet (15), an outlet (16) that emerges on the port hole (11) ; and
• a sheath (3) comprising a sleeve (31) made from a cylindrical substance having a downstream end (32), such that:
- the outlet section (14) of the passage surrounds the sleeve (31) of the sheath (3);
- the downstream end (32) of the sleeve (31) emerges in the port hole (11); and
- 0.4 mm ≤ Db - De ≤ 1.0 mm, Db being the inside diameter of the outlet section (14) of the passage and De being the outside diameter of the sleeve (31) of the sheath (3);
the injector (2) being installed in the passage of the quarl block (1) so that the injector (2) passes through the passage and emerges in the port hole (11) and so that the sleeve of the sheath (3) surrounds the injector (2) at least in the outlet section (14) of the passage, the injector (2) and the sheath (3) being such that:
- there exists a clearance ΔD of 0.2 mm to 0.4 mm between the sleeve (31) of the sheath (3) and the injector (2);
- 0.8 x Linj ≤ Lf ≤ Linj, Lf being the length of the sleeve (31) of the sheath (3) between the inlet of the outlet section (14) of the passage and the downstream end (32) of the sheath (3), Linj being the length of the injector (2) between the inlet (15) of the outlet section (14) of the passage and the injection opening (22) of the injector (2), preferably 0.9 x Linj ≤ Lf ≤ Linj.

10. Method according to either claim 8 or claim 9, in which the injector (2) is connected to a fuel source and/or to an oxidant source.

11. Method according to any of claims 8 to 10, in which the port hole block (1) is situated in a wall of a combustion chamber, preferably in a wall of a glass-melting furnace or of a channel for the conditioning of glass.

12. Method according to any of claims 8 to 11, in which the internal surface of the sleeve (31) is provided with support and centring zones projecting between the sleeve (31) and the injector (2), said support zones covering less than 20%, preferably less than 15% and more preferably still less than 10% of the internal surface of the sleeve (31), said support and centring zones preferably having a thickness d of 1.0 mm to 2.0 mm.

13. Method according to any of claims 8 to 11, in which the external surface of the injector (2) is provided with support and centring zones (33) projecting between the injector (2) and the sleeve (31), said support and centring zones (33) covering less than 20%, preferably less than 15% and more preferably still less than 10% of the external surface of the injector (2), said support and centring zones preferably having a thickness d of 1.0 mm to 2.0 mm.

14. Method according to any of claims 8 to 13, in which the sleeve (31) of the sheath (3) is made from refractory ceramic or refractory metal, preferably refractory steel.

15. Method according to any of claims 8 to 14, in which the sheath (3) comprises anchoring means (34, 35) for fixing the position of the sheath (3) with respect to the inlet (15) of the outlet section (14) of the passage.
